# EUROPÄISCHE PATENTANMELDUNG

(11) **EP 0 691 661 A2**
(43) Veröffentlichungstag der Anmeldung: **10.01.1996**
(21) Anmeldenummer: 95110228.4
(22) Anmeldetag: 30.06.1995
(51) Int. Cl.: H01F 1/00, H01F 1/44, G11B 5/68

(54) **Ferromagnetische Pigmente**

(30) Priorität: 09.07.1994 DE 4424221
(71) Anmelder: BASF Magnetics GmbH, D-68165 Mannheim (DE)
(72) Erfinder: Schwab, Ekkehard, Dr., D-67434 Neustadt (DE); Simon, Joachim, Dr., D-68161 Mannheim (DE); Müller, Ulrich, Dr., D-67434 Neustadt (DE); Poganiuch, Peter, Dr., D-67434 Neustadt (DE); Kormann, Claudius, Dr., D-55411 Bingen (DE)
(74) Vertreter: Werner, Frank

(57) **Zusammenfassung**

Ferromagnetische Pigmente aus einem porösen anorganischen nicht-magnetischen Gerüstmaterial mit parallelen oder annähernd parallelen Poren und ferromagnetischen Teilchen, die in die Poren des Gerüstmaterials eingebettet sind.

Die Pigmente werden zur Herstellung magnetischer Aufzeichnungsmaterialien sowie magnetorheologischer und magnetodilatanter Flüssigkeiten eingesetzt.

## Beschreibung

Die vorliegende Erfindung betrifft ferromagnetische Pigmente aus einem porösen anorganischen nicht-magnetischen Gerüstmaterial mit parallelen oder annähernd parallelen Poren und ferromagnetischen Teilchen, die in die Poren des Gerüstmaterials eingebettet sind.

Außerdem betrifft die vorliegende Erfindung Verfahren zur Herstellung solcher Pigmente, die Verwendung der Pigmente zur Herstellung magnetischer Aufzeichnungsmaterialien und magnetische Aufzeichnungsmaterialien, die solche Pigmente enthalten.

Für die Herstellung magnetischer Aufzeichnungsmedien werden bekanntermaßen nadelförmige, ferromagnetische Pigmente wie Chrom-IV-dioxid, Eisenoxide, Ferrite, Eisen oder Eisenlegierungen eingesetzt. Die Länge der Partikel beträgt insbesondere bei Aufzeichnungssystemen mit hoher Speicherdichte, d.h. Aufzeichnungswellenlängen von etwa 0,5 µm, 80 bis 150 nm bei einem Verhältnis von Länge zu Durchmesser von 4 bis 10.

Die magnetischen Pigmente werden bekanntermaßen bei der Herstellung des Aufzeichnungsmediums in einem Lösungsmittel zusammen mit üblichen Zusatzstoffen dispergiert. Nach dem Auftragen dieser Dispersion auf ein unmagnetisches Trägermaterial müssen die Pigmentpartikel orientiert werden. Sowohl das Dispergieren, als auch das Orientieren der Pigmentpartikel gelingt auf Grund der geringen Partikelgröße in der Regel nur mit erheblichem technischen Aufwand.

Zur Verbesserung der Dispergierbarkeit können zwar metallische Eisenpartikel in einer Matrix aus Zeolith NaX abgeschieden werden (F. J. Lazaro et al., IEEE Trans. Magn. 29(6) (1993) 265). Das Problem der Orientierbarkeit der Partikel konnte jedoch dadurch nicht gelöst werden, da keine nadelförmigen, sondern isometrische Eisenteilchen entstehen.

Der Erfindung lagen daher ferromagnetische Pigmente als Aufgabe zugrunde, die sich sowohl leicht dispergieren als auch orientieren lassen.

Demgemäß wurden die eingangs definierten ferromagnetischen Pigmente gefunden.

Weiterhin wurden Verfahren zur Herstellung solcher Pigmente, die Verwendung der Pigmente zur Herstellung magnetischer Aufzeichnungsmaterialien und magnetische Aufzeichnungsmaterialien, die solche ferromagnetischen Pigmente enthalten, gefunden.

Das Gerüstmaterial kann aus oxidischen, carbidischen oder nitridischen, bevorzugt oxidischen, kristallinen Iso- oder Heteropolyverbindungen mit parallel oder annähernd parallel, bevorzugt symmetrisch, insbesondere bienenwabenartig hexagonal symmetrisch angeordneten Poren mit einem mittleren Durchmesser von 2 bis 50 nm bestehen. Die Partikelgröße des Gerüstmaterials sollte 100 bis 1000 nm betragen.

Als Gerüstmaterial kommen vor allem Polykieselsäuren und Aluminium enthaltende Polykieselsäuren (Alumosilikate) in Betracht. Diese Polykieselsäuren können noch weitere Ionen enthalten, durch deren Einbau die Struktur des Gerüstes abgewandelt werden kann.

Als hierfür geeignete Elemente kommen die Alkalimetalle wie Lithium, Natrium und Kalium, die Erdmetalle wie Beryllium und Magnesium, die Erdalkalimetalle wie Bor und Gallium, die Elemente der vierten Hauptgruppe wie Germanium, Zinn und Blei, die Elemente der fünften Hauptgruppe wie Phosphor, Arsen und Antimon, die Elemente der Seltenen Erden wie Scandium, Yttrium, Lanthan und Cer, die Elemente der Eisengruppe Eisen, Kobalt und Nickel und weitere Metalle der Übergangsgruppen wie Titan, Zirkonium, Hafnium, Vanadium, Niob, Tantal, Chrom, Molybdän, Wolfram, Mangan, Kupfer, Zink und Cadmium in Betracht.

Zur Herstellung der Iso- oder Heteropolyverbindungen eignen sich die Sulfate, Phosphate, Nitrate, Carbonate, Halogenide, Oxide, Hydroxide, Oxidhydrate und Perchlorate, bevorzugt Sulfate, Phosphate, Nitrate und Oxide, besonders bevorzugt Sulfate, Nitrate und Oxide, der Elemente.

Als Vorstufen können auch hydrolysierbare Komponenten, wie Alkoholate, Chelate, Carboxylate der vorgenannten Elemente eingesetzt werden.

Zur Erzielung der definierten Porenstruktur werden während der Herstellung Tenside, vorzugsweise anionische oder kationische Tenside, in wäßrigen, organischen oder wäßrig-organischen Systemen, vorzugsweise in Alkoholen, insbesondere C₁-C₆-Alkanolen oder C₂-C₆-Alkandiolen, eingesetzt.

Als anionische Tenside seien solche vom Typ der Carboxylate wie langkettige Fettsäuren oder deren Salze, Sulfonate wie Ligninsulfonate, Alkylbenzolsulfonate, Alkylnaphthalinsulfonate, Alkylsulfonate, Sulfofettsäureester, Sulfofettsäureamide, Alkoxyalkylsulfonate, Sulfate wie Alkylsulfate und Ethersulfate, Phosphonate und Phosphate genannt.

Als kationische Tenside können Verbindungen der Formel R₁R₂R₃R₄Q⁺ verwendet werden, in denen Q Stickstoff oder Phosphor und mindestens eine der Gruppen R₁, R₂, R₃ oder R₄ eine Aryl- oder Alkylgruppe mit 6 bis 36 Kohlenstoffen und die restlichen Gruppen Wasserstoff oder eine C₁-C₅-Alkylgruppe bedeutet. Diese Verbindungen können als Hydroxide, Halogenide oder Silicate eingesetzt werden. Hervorgehoben seien Cetyltrimethylammonium-, Cetyltrimethylphosphonium-, Octadecyltrimethylphosphonium-, Benzyltrimethylammonium-, Cetylpyridinium-, Myristyltrimethylammonium-, Decyltrimethylammonium-, Dodecyltrimethylammonium- und Dimethyldidodecylammonium-Salze.

Insbesondere die genannten kationischen Tenside eignen sich zur Herstellung der Gerüstsubstanzen, wobei sie als sogenannte Template dienen.

Zur Einstellung der Porengröße können weitere Hilfsstoffe wie aliphatische oder aromatische, unsubstituierte oder halogen- oder stickstoffsubstituierte Kohlenwasserstoffe, Polyelektrolyte, flüssigkristalline Polymere oder stäbchenförmige geladene Verbindungen zugegeben werden.

Die Kristallisation der Gerüstpigmente kann in der Regel bei Temperaturen von 20 bis 250°C, bevorzugt 50 bis 150°C, besonders bevorzugt 70 bis 120°C, unter Drücken von 0,1 bis 5 bar durchgeführt werden. Die Dauer der Kristallisation kann zwischen wenigen Minuten bis zu mehreren Tagen betragen, bevorzugt je nach Temperatur und Konzentration an Einsatzstoffen im Bereich von 1 bis 300 Stunden.

Nach der Kristallisation können die Gerüstpigmente noch erhebliche Mengen an Tensid enthalten. Zur Entfernung können die aus der Zeolith-Synthese bekannten Verfahrensweisen der thermischen Zersetzung, des Extrahierens mit Lösungsmitteln oder der Behandlung mit Wasserdampf bei erhöhter Temperatur eingesetzt werden. Thermoanalytische Messungen an kleinen Proben können als Vortest dienen, um die Temperatur so zu wählen, daß zwar das Tensid entfernt, aber die Gerüststruktur durch die thermische Behandlung nicht geschädigt wird.

Näheres zur Herstellung der erfindungsgemäß geeigneten Gerüstsubstanzen ist der WO 91/11390 und der älteren deutschen Patentanmeldung P 44 07 326.7 zu entnehmen.

Zur Erzielung der magnetischen Eigenschaften der erfindungs-gemäßen Pigmente werden in die Poren des Gerüstmaterials ferromagnetische Teilchen eingebettet. Unter ferromagnetischen Stoffen sind alle diejenigen Stoffe zu verstehen, die sich in einem Magnetfeld mit Wirkung nach außen permanent magnetisieren lassen, d.h. der Begriff Ferromagnetismus umfaßt auch die Sonderform des Ferrimagnetismus.

Als ferromagnetische Teilchen können die an sich bekannten ferromagnetischen Pigmente, wie Chrom-IV-dioxid, Ferrite, Eisenoxide, Eisen oder Eisenlegierungen, insbesondere Eisen oder Eisenlegierungen, verwendet werden.

Die ferromagnetischen Teilchen können die Poren teilweise oder vollständig ausfüllen, sollten jedoch soweit in der Pore fixiert sein oder die Pore ausfüllen, daß bei der Orientierung der ferromagnetischen Pigmente das gesamte Pigment und nicht nur die ferromagnetischen Teilchen in den Poren ausgerichtet werden.

Ferner können sich neben einem auch mehrere Teilchen in einer Pore befinden.

Die ferromagnetischen Teilchen können dabei vorteilhaft in den Poren in situ durch physikalische oder chemische Prozesse, vorzugsweise durch Zersetzung einer chemischen Verbindung, die sich in ferromagnetische Teilchen überführen läßt, erzeugt werden.

So kann zur Einbringung der magnetischen Teilchen in die Poren des Gerüstmaterials dieses mit einer flüssigen Verbindung oder einer Lösung einer Verbindung imprägniert werden, die sich in Teilchen eines magnetischen Materials überführen läßt, oder vorzugsweise einer gasförmigen Verbindung behandelt werden, die sich in Teilchen eines magnetischen Materials überführen läßt.

Zur Imprägnierung des Gerüstmaterials in flüssiger Phase können Lösungen von leicht zersetzlichen, insbesondere thermisch zersetzlichen Komponenten wie Carbonaten, Alkoholaten, Carboxylaten oder Chelaten der entsprechenden Metalle, bevorzugt Oxalate, Acetate, Lactate, und Acetylacetonate, oder metallorganische π-Komplexe, bevorzugt aromatische π-Komplexe wie Cyclopentadienylkomplexe, in wäßrigen Systemen oder vorzugsweise Systemen organischer Lösungsmittel, wie Alkoholen, Ethern, Estern, Ketonen oder Kohlenwasserstoffen eingesetzt werden.

Nach der Imprägnierung trocknet man die Teilchen zweckmäßigerweise und unterwirft sie dann in an sich bekannter Weise einer chemischen Reaktion, bei der sich in den Poren die Magnetpartikel bilden. Bevorzugt wird die thermische Zersetzung bei 50 bis 500°C, vorzugsweise 50 bis 150°C, durchgeführt. Möchte man metallische Magnetpartikel erzielen, empfiehlt sich häufig das Arbeiten in reduzierender Atmosphäre, vorzugsweise Wasserstoff oder Kohlenmonoxid, und zur Herstellung oxidischer Magnetpigmente nimmt man die Zersetzung vorzugsweise in Gegenwart von Sauerstoff oder Sauerstoff enthaltenden Gasen wie Luft vor.

Gasförmige Verbindungen sind flüchtige anorganische Metallverbindungen wie Metallcarbonyle, insbesondere die des Eisens, des Kobalts, des Chroms und/oder Nickels, unter denen Eisenpentacarbonyl, Dikobaltoctacarbonyl, Chromhexacarbonyl und Nickeltetracarbonyl besonders geeignet sind, oder Metalltrifluorphosphine, insbesondere die des Eisens, des Kobalts, des Chroms und/oder Nickels, unter denen Eisenpentatrifluorphosphin besonders geeignet ist, oder flüchtige organische Metallverbindungen, bevorzugt flüchtige metallorganische π-Komplexe, besonders bevorzugt aromatische metallorganische π-Komplexe wie Cyclopentadienylkomplexe. Man kann sie allein oder zusammen mit inerten Gasen wie Stickstoff oder Argon einsetzen. Die anschließende Zersetzungsreaktion nimmt man dann in analoger Weise wie im Falle der Imprägnierung mit den Lösungen Magnetpigment bildender Verbindungen vor.

Nach dem Einbau von metallischen magnetischen Teilchen besteht die Möglichkeit, die Teilchen oberflächlich nachzubehandeln, vorzugsweise mit einer oxidierend wirkenden Verbindung, insbesondere einem Gas wie Sauerstoff oder einem Sauerstoff enthaltenden Gas. Bei magnetischen Verbindungen wie Oxiden, Nitriden oder Carbiden kann die Oberfläche der Teilchen nach dem Einbau sowohl oxidierend, als auch reduzierend z.B. mit Wasserstoff nachbehandelt werden.

Die erfindungsgemäßen ferromagnetischen Pigmente können zur Herstellung magnetischer Aufzeichnungsmaterialien verwendet werden. Dazu können die Pigmente gegebenenfalls mit Füllstoffen in an sich bekannter Weise in einer Lösung aus einem Lösungsmittel, einem Bindemittel und weiteren Zusatzstoffen wie einem Gleitmittel und einem Dispergiermittel dispergiert und auf eine unmagnetische Trägerschicht aufgetragen werden. Nach der Orientierung der ferromagnetischen Pigmente in einem starken Magnetfeld kann die weitere Verarbeitung wie üblich erfolgen, z.B. durch Entfernen des Lösungsmittel und, falls erforderlich, Aushärten des Bindemittels mit anschließendem Kalandrieren.

Als Lösungsmittel können wie üblich Wasser, Ether wie Tetrahydrofuran oder Dioxan, Ketone wie Methylethylketon oder Cyclohexanon, Ester wie Ethylacetat oder Kohlenwasserstoffe wie Alkane oder Aromaten oder Mischungen dieser Lösungsmittel eingesetzt werden.

Als Bindemittel kommen bekanntermaßen Polyurethane, Polyacrylate, Polymethacrylate, Polyacrylamid, Vinylpolymere wie Polystyrol, Polyvinylchlorid, Polyvinylacetat, Polyvinylpropionat oder Polyacrylnitril, cellulosehaltige Bindemittel wie Celluloseester, insbesondere Cellulosenitrate, Celluloseacetat, Cellulosetriacetat, Celluloseacetopropionat oder Celluloseacetobutyrat, Phenoxyharze, Epoxyharze oder Block- oder Copolymerisate dieser Verbindungen in Betracht.

Als Gleitmittel finden üblicherweise Carbonsäuren mit 10 bis 20 Kohlenstoffatomen, insbesondere Stearinsäure und Palmitinsäure, oder Derivate von Carbonsäuren, wie deren Salze, Ester und Amide Anwendung.

Als Dispergiermittel können in üblicher Weise kationische, nicht-ionische oder vorzugsweise anionische Tenside verwendet werden, wie Carboxylate, Sulfonate oder Phosphonate von Kohlenwasserstoffen, insbesondere Alkyl- oder Arylverbindungen.

Als Füllstoffe kommen wie üblich anorganische und organische Pigmente in Betracht, z.B. Aluminiumoxid, Siliziumdioxid, Ruß, Polyethylen und Polypropylen.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 6 bis 36 µm.

Bei der Herstellung magnetischer Aufzeichnungsmaterialien können die erfindungsgemäßen Pigmente allein oder im Gemisch mit anderen ferromagnetischen Materialien verwendet werden. Ebenso ist es möglich, mehrere ferromagnetische Materialien enthaltende Lagen, von denen mindestens eine das erfindungsgemäße Pigment enthält, auf das Trägermaterial aufzubringen.

Bei der Verwendung der erfindungsgemäßen Pigmente zur Herstellung magnetischer Aufzeichnungsmaterialien bildet das anorganische Gerüstmaterial einen guten mechanischen und chemischen Schutz der ferromagnetischen Teilchen insbesondere gegen Abrieb und Korrosion, und damit gegen eine deutliche Verschlechterung der magnetischen Eigenschaften des Aufzeichnungsmaterials.

Ferner kann dieser gute Schutz der ferromagnetischen Teilchen vorteilhaft in Anwendungen genutzt werden, in denen die Teilchen extremen mechanischen Beanspruchungen und/oder Korrosionseinflüssen ausgesetzt sind, insbesondere in Dispersionen der ferromagnetischen Teilchen in einem Lösungsmittel. Solche Dispersionen, denen in an sich bekannter Weise weitere Hilfsstoffe wie Dispergiermittel zugesetzt werden können, eignen sich z.B. als magnetorheologische oder magnetodilatante Flüssigkeiten.

Unter magnetorheologischen Flüssigkeiten sind Flüssigkeiten zu verstehen, deren Viskosität durch ein äußeres Magnetfeld beeinflußt werden kann (vgl. V. I. Kordonsky, J. Magnetism and Magnetic Materials 85(1990)114-120, EP-A 534 234).

Unter dilatanten Flüssigkeiten versteht man Flüssigkeiten, deren Viskosität sich mit steigender Scherbeanspruchung erhöht (vgl. E. J. W. Verwey, Rec. Trav. Chim. 57(1939)383-389). Bei magnetodilatanten Flüssigkeiten kann dieser Effekt durch Anlegen eines äußeren Magnetfeldes beeinflußt werden (vgl. EP-A 566931).

Magnetorheologische und magnetodilatante Flüssigkeiten können zur Regelung von Bewegungsabläufen und der Dämpfung von Schwingungen z.B. in Visko-Kupplungen oder Stoßdämpfern eingesetzt werden.

Als Lösungsmittel können in diesen Flüssigkeiten wie üblich Wasser, Ether wie Tetrahydrofuran oder Dioxan, Ketone wie Methylethylketon oder Cyclohexanon, Ester wie Ethylacetat oder Kohlenwasserstoffe wie Alkane oder Aromaten oder Mischungen dieser Lösungsmittel eingesetzt werden.

Als Dispergiermittel kommen in üblicher Weise kationische, nicht-ionische oder vorzugsweise anionische Tenside in Betracht, wie Carboxylate, Sulfonate oder Phosphonate von Kohlenwasserstoffen, insbesondere Alkyl- oder Arylverbindungen.

Bei der Herstellung der magnetorheologischen oder magnetodilatanten Flüssigkeiten können die erfindungsgemäßen Pigmente allein oder im Gemisch mit anderen ferromagnetischen Materialien verwendet werden.

### Beispiel

### a) Herstellung des Gerüstmaterials

Zu 100 Gramm einer wäßrigen 29 Gew.-%-igen Cetyltrimethylammoniumhydroxid-Lösung, erhalten durch Ionenaustausch einer Cetyltrimethylammoniumchlorid-Lösung an einem Anionentauscher, wurden unter Rühren 100 Gramm einer wäßrigen 25 Gew.-%-igen Tetramethylammoniumhydroxid-Lösung und 25 g einer hydratisierten Fällungskieselsäure, die 6 Gew.-% freies Wasser und etwa 4,5 Gew.-% gebundenes Wasser enthielt, gegeben. Die Fällungskiesel-säure wies eine maximale Partikelgröße von 0,02 µm auf. Die Mischung wurde in einem Autoklaven 12 h bei 150°C ohne Rühren gehalten.

Nach dem Abkühlen wurde das Produkt durch Filtration und Trocknen an der Luft bei Raumtemperatur erhalten.

Anschließend wurde das Produkt an der Luft mit einer Aufheizrate von 1°C/min auf 500°C gebracht und vier Stunden auf dieser Temperatur gehalten. Hierbei wurden die strukturbildenden Ammoniumverbindungen (Template) entfernt.

### b) Einbetten der ferromagnetischen Teilchen

2.8 g des Gerüstmaterials wurden in einem senkrecht eingespannten, beheizbaren Glasrohr (40 cm Länge, 2 cm Durchmesser), das im unteren Drittel mit einer Glasfritte D2 versehen war, mit einem Gasstrom aus 2 Vol-% Eisenpentacarbonyl und 98 Vol-% Stickstoff mit 15 l/h durchströmt. Dabei stieg die Temperatur von 25 auf 40°C an. Anschließend wurde unter weiterer Gasdurchleitung die Temperatur innerhalb von 90 min auf 250°C erhöht. Ab 60-70°C setzte eine Reaktion ein. Nach dem Abkühlen wurden 3.7 g eines nicht pyrophoren Produktes erhalten, welches 24 Gew.-% Eisen enthielt, das neben oberflächlich abgeschiedenen Eisenpartikeln regelmäßig angeordnete, orientierte, nadelförmige Eisenteilchen im Porensystem des Gerüstmaterials aufwies.

Für die ferromagnetischen Pigmente wurde eine Sättigungsmagnetisierung von 226 nTm³/g ermittelt.

## Patentansprüche

1. Ferromagnetische Pigmente aus einem porösen anorganischen nicht-magnetischen Gerüstmaterial mit parallelen oder annähernd parallelen Poren und ferromagnetischen Teilchen, die in die Poren des Gerüstmaterials eingebettet sind.

2. Ferromagnetische Pigmente nach Anspruch 1, bei denen die Poren des Gerüstmaterials einen mittleren Durchmesser von 2 bis 50 nm aufweisen.

3. Ferromagnetische Pigmente nach Anspruch 1 oder 2, in denen das Gerüstmaterial aus einem Silikat oder Alumosilikat besteht, welches durch Kristallisation von Iso- oder Heteropoly-verbindungen der Metalloxide in Anwesenheit von Tensiden bei Temperaturen von 20 bis 250°C unter Drücken von 0,1 bis 5 bar in mindestens einem Lösungsmittel erhältlich ist.

4. Ferromagnetische Pigmente nach den Ansprüchen 1 bis 3, in denen die ferromagnetischen Teilchen in metallischer Form vorliegen.

5. Ferromagnetische Pigmente nach den Ansprüchen 1 bis 4, die eine Partikelgröße von 100 bis 5000 nm aufweisen.

6. Verfahren zur Herstellung der ferromagnetischen Pigmente gemäß den Ansprüchen 1 bis 5, dadurch gekennzeichnet, daß man das anorganische Gerüstmaterial mit einer flüssigen Verbindung oder einer Lösung einer Verbindung imprägniert, die sich in Teilchen eines ferromagnetischen Materials umwandeln läßt, und daß man diese Umwandlung nach der Imprägnierung vornimmt.

7. Verfahren zur Herstellung der ferromagnetischen Pigmente gemäß den Ansprüchen 1 bis 5, dadurch gekennzeichnet, daß man in das anorganische Gerüstmaterial eine gasförmige Verbindung diffundieren läßt, die sich in Teilchen eines ferromagnetischen Materials umwandeln läßt, und daß man diese Umwandlung im Anschluß an den Diffusionsvorgang vornimmt.

8. Ferromagnetische Pigmente, erhältlich nach dem Verfahren gemäß Anspruch 6 oder 7.

9. Verwendung der ferromagnetischen Pigmente gemäß den Ansprüchen 1 bis 8 zur Herstellung von magnetischen Aufzeichnungsmaterialien.

10. Magnetische Aufzeichnungsmaterialien, enthaltend ein ferromagnetisches Pigment gemäß den Ansprüchen 1 bis 8.

11. Verwendung der ferromagnetischen Pigmente gemäß den Ansprüchen 1 bis 8 zur Herstellung magnetorheologischer Flüssigkeiten.

12. Magnetorheologische Flüssigkeiten, enthaltend ein ferromagnetisches Pigment gemäß den Ansprüchen 1 bis 8.

13. Verwendung der ferromagnetischen Pigmente gemäß den Ansprüchen 1 bis 8 zur Herstellung magnetodilatanter Flüssigkeiten.

14. Magnetodilatante Flüssigkeiten, enthaltend ein ferromagnetisches Pigment gemäß den Ansprüchen 1 bis 8.
